# EUROPEAN PATENT SPECIFICATION

(11) **EP 2 858 395 B1**
(45) Date of publication and mention of the grant of the patent: **24.06.2020**
(21) Application number: 12880477.0
(22) Date of filing: 02.07.2012
(51) Int. Cl.: H04W 12/06, H04L 29/06, H04W 84/12

(54) **METHOD AND SYSTEM FOR ACCESSING MOBILE NETWORK**
VERFAHRENUND SYSTEM ZUM ZUGRIFF AUF MOBILES NETZWERK
PROCÉDÉ ET SYSTÈME D'ACCÈS À UN RÉSEAU MOBILE

(43) Date of publication of application: 08.04.2015
(73) Proprietor: Huawei Technologies Co., Ltd., Longgang District Shenzhen, Guangdong 518129 (CN)
(72) Inventor: WANG, Shanshan, Shenzhen Guangdong 518129 (CN)
(74) Representative: Pfenning, Meinig & Partner mbB
(86) International application number: PCT/CN2012/078059
(87) International publication number: WO 2014/005267

(56) References cited:
- WO-A1-2012/006448
- CN-A- 1 674 497
- US-A1- 2004 162 998
- US-A1- 2005 130 659
- US-A1- 2006 128 362
- US-A1- 2008 165 702

## Description

### TECHNICAL FIELD

Embodiments of the present invention relate to the field of communications technologies, and in particular, to a method, an apparatus, and a system for accessing a mobile network.

### BACKGROUND

In an authentication manner for a UE (User Equipment, user equipment) to access a WLAN (Wireless Local Area Network, wireless local area network), generally, a user name and a password are used as a user identity, and the WLAN authenticates a user according to a user name and a password. The UE accessing the WLAN may be referred to as a WLAN UE.

However, a user name and password authentication manner for a WLAN UE cannot implement access to a mobile network. Therefore, a method for accessing a mobile network needs to be provided for the WLAN UE to meet a requirement of the WLAN UE.

US 2004/162998 describes a service authentication in a communication system concerned with authentication in an access network. In order to be able to utilize the infrastructure of a separate mobile communication network for the authentication of subscribers with traditional (non-SIM) terminals, a subscriber is provided with a first password comprising a first element derived from a second password stored in the mobile communication network. When the subscriber enters the access network, a first request is sent to the mobile communication network, the first request triggering in the mobile communication network the sending of a first response which requests the second password. A third password is then sent to the mobile communication network as a response, the third password being derived from the first element. The third password is matched against the second password and the service is provided to the subscriber when the matching indicates that the third password and the second password have a predetermined relationship.

### SUMMARY

This object is solved by the method for accusing a mobile network according to claim 1 and the system for accessing a mobile network according to claim 2. The dependent claim describes advantageous embodiments of the method and the system.

Embodiments of the present invention provide a method and a system for accessing a mobile network, so as to implement access of a WLAN UE to a mobile network.

With the method and the system for accessing a mobile network in the embodiments of the present invention, a user identity that is for a UE to access a mobile network and is associated with a user identity for the UE to access a WLAN is obtained according to the user identity for the UE to access the WLAN, so that access of the UE to the mobile network can be implemented through the user identity for the UE to access the mobile network.

### BRIEF DESCRIPTION OF DRAWINGS

FIG. 1 is a schematic flow chart of a method for accessing a mobile network according to an embodiment of the present invention;
FIG. 2 is a schematic flow chart of another method for accessing a mobile network according to an embodiment of the present invention;
FIG. 3 is a schematic flow chart of still another method for accessing a mobile network according to an embodiment of the present invention;
FIG. 4 is a schematic flow chart of still another method for accessing a mobile network according to an embodiment of the present invention;
FIG. 5 is a schematic flow chart of still another method for accessing a mobile network according to an embodiment of the present invention;
FIG. 6 is a schematic flow chart of yet another method for accessing a mobile network according to an embodiment of the present invention;
FIG. 7 is a schematic structural diagram of an apparatus for accessing a mobile network according to an embodiment of the present invention;
FIG. 8 is a schematic structural diagram of another apparatus for accessing a mobile network according to an embodiment of the present invention;
FIG. 9 is a schematic structural diagram of a system for accessing a mobile network according to an embodiment of the present invention;
FIG. 10 is a schematic diagram of an application scenario of a system for accessing a mobile network according to an embodiment of the present invention; and
FIG. 11 is a schematic diagram of still another application scenario of a system for accessing a mobile network according to an embodiment of the present invention.

### DESCRIPTION OF EMBODIMENTS

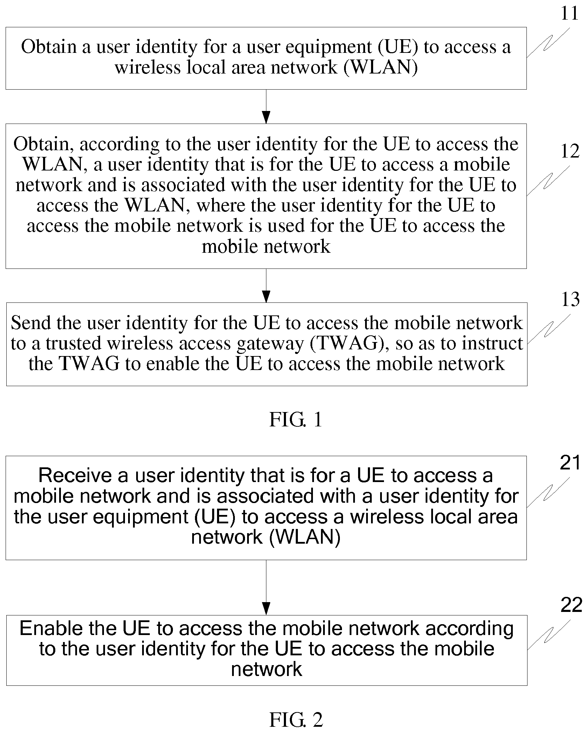

As shown in FIG. 1, an embodiment of the present invention provides a method for accessing a mobile network, which includes the following steps.
11: Obtain a user identity for a UE (User Equipment, user equipment) to access a WLAN (Wireless Local Area Network, wireless local area network).
12: Obtain, according to the user identity for the UE to access the WLAN, a user identity that is for the UE to access a mobile network and is associated with the user identity for the UE to access the WLAN.
13: Send the user identity for the UE to access the mobile network to a TWAG (Trusted WLAN Access Gateway, trusted wireless access gateway), so as to instruct the TWAG to enable the UE to access the mobile network.

An executor of the method for accessing a mobile network in the embodiment of the present invention may be an entity for implementing an authentication function, such as an AAA (Authority, Authentication, Accounting, authentication, authorization, and accounting) server or an AAA Proxy (proxy).

In the embodiment of the present invention, the TWAG and the AAA proxy may be disposed on a same physical device.

Exemplarily, in the method for accessing a mobile network in the embodiment of the present invention, the user identity for the UE to access the WLAN may include: (1) a user name, or (2) a user name and a password. The user name and password authentication manner for the UE to access the WLAN may be a Portal (portal) authentication manner or a PEAP (Protected Extensible Authentication Protocol, protected extensible authentication protocol) authentication manner, or the like, which is not limited in the embodiment of the present invention.

Exemplarily, the user identity for the UE to access the mobile network may include: an MSISDN (The Mobile Station ISDN number, a mobile station identification number, ISDN, Integrated Service Digital Network, integrated service digital network)) and an IMSI (International Mobile Subscriber Identification Number, international mobile subscriber identification number).

In the method for accessing a mobile network in the embodiment of the present invention, the UE may be a mobile phone (cell phone), a personal computer (PC), a tablet computer, a mobile station (Mobile Station, MS), or a mobile terminal (Mobile Terminal, MT) or the like. In the embodiment of the present invention, accessing the mobile network may refer to accessing a core network of a mobile operator, for example, a core network of a 3GPP (The 3rd Generation Project Partnership, the 3rd generation partnership project) system or a core network of a CDMA (Code Division Multiple Access, code division multiple access) system.

Exemplarily, the obtaining a user identity for a UE to access a WLAN in step 11 may be as follows: By taking a scenario in which an AAA server exists as an example, the UE enters a user name and a password in a Portal page, the user name and the password are sent to an AC (Access Controller, access controller)/Bras (broadband remote access server, broadband remote access server), the AC/Bras sends the user name and the password to the AAA server, and the AAA server performs portal authentication on the UE, so that the AAA server obtains the user name or the user name and the password, that is, the user identity for the UE to access the WLAN is obtained.

Exemplarily, the obtaining, according to the user identity for the UE to access the WLAN, a user identity that is for the UE to access a mobile network and is associated with the user identity for the UE to access the WLAN in step 12 may include:

### (1): Directly obtain, according to the WLAN user identity, the user identity for the UE to access the mobile network.

For example, an MSISDN and an IMSI that are associated with the user name are obtained according to the user name, association between the user name and the MSISDN, and association between the user name and the IMSI, wherein the association between the user name and the MSISDN and the association between the user name and the IMSI are preconfigured, that is, may be configured on the AAA server or the AAA Proxy in advance through a database or a configuration file. As shown in Table 1, an MSISDN corresponding to a user whose user name is User1 may be MSIDN1, and a corresponding IMSI may be IMSI1.

**Table 1**

| Serial number | User name | MSISDN | IMSI |
|---|---|---|---|
| 1 | User1 | MSISDN1 | IMSI1 |
| 2 | User2 | MSISDN2 | IMSI2 |

For another example, an MSISDN and an IMSI that are associated with the user name and the password are obtained according to the user name and the password, the association between the user name and the password and the MSISDN, and association between the user name, the password and the IMSI, wherein the association between the user name and the password and the MSISDN and the association between the user name and the password and the IMSI are preconfigured, that is, may be configured on the AAA server or the AAA Proxy in advance through a database or a configuration file. As shown in Table 2, an MSIDN corresponding to a user whose user name is Userl and password is Password1 may be MSISDN1, and a corresponding IMSI is IMSI1.

**Table 2**

| Serial number | User name | Password | MSISDN | IMSI |
|---|---|---|---|---|
| 1 | User1 | Password1 | MSISDN1 | IMSI1 |
| 2 | User2 | Password2 | MSISDN2 | IMSI2 |

Exemplarily, the AAA server may obtain the association between the user name or the user name and the password and the MSISDN and the association between the user name or the user name and the password and the IMSI from an external database in advance, or the association between the user name or the user name and the password and the MSISDN and the association between the user name or the user name and the password and the IMSI are preconfigured on the AAA server. The external database may include an operator database, or an operator database file or the like.

The user name or the user name and the password may also be associated with subscription data of the mobile network, such as an APN (Access Point Name, access point name) or QoS (Quality of Service, quality of service) information.

### (2): Directly obtain an IMSI of the UE according to the WLAN user identity, and further obtain an MSIDN according to the IMSI.

For example, an IMSI associated with the user name is obtained according to the user name and association between the user name and the IMSI, and an MSISDN that is associated with the IMSI associated with the user name is obtained from a home location register HLR or a home subscriber server HSS according to the IMSI associated with the user name, wherein the association between the user name and the IMSI may be preconfigured.

For another example, an IMSI associated with the user name and the password is obtained according to the user name and the password and association between the user name and the password and the IMSI, and an MSISDN that is associated with the IMSI associated with the user name and the password is obtained from an HLR (Home Location Register, home location register) or an HSS (Home Subscriber Server, home subscriber server) according to the IMSI associated with the user name and the password, where the association between the user name and the password and the IMSI may be preconfigured.

The AAA server may obtain the association between the user name and the IMSI from an external database, or the association between the user name and the IMSI is preconfigured on the AAA server. The external database may include an operator database, or an operator database file or the like.

The user name or the user name and the password may also be associated with subscription data of the mobile network, such as an APN or QoS information.

### (3): When the user name is an MSISDN, obtain an IMSI associated with the MSISDN from an HLR or an HSS according to the MSISDN.

The user name may also be associated with subscription data of the mobile network, such as an APN or QoS information.

Exemplarily, a manner for sending the user identity for the UE to access the mobile network to a TWAG in step 13 may be:
(1) sending the user identity for the UE to access the mobile network to the TWAG through an accounting response message; or
(2) sending the user identity for the UE to access the mobile network to the TWAG through an authentication response message.

Optionally, the method for accessing a mobile network in the embodiment of the present invention may further include: sending the APN or the QoS information to the TWAG. Or, optionally, a default value may also be configured on the TWAG for the information such as the APN or the QoS.

Being similar to the manner of sending the user identity for the UE to access the mobile network to the TWAG, the sending the APN to the TWAG may include: (1) sending the APN to the TWAG to the TWAG through an accounting response message; or (2) sending the APN to the TWAG to the TWAG through an authentication response message.

It can be seen from the technical solution of the method for accessing a mobile network according to the embodiment of the present invention that, a user identity that is for a UE to access a mobile network and is associated with a user identity for the UE to access a WLAN is obtained according to the user identity for the UE to access the WLAN, so that access of the WLAN UE to the mobile network can be implemented through the user identity for the UE to access the mobile network.

As shown in FIG. 2, an embodiment of the present invention provides a method for accessing a mobile network, which includes the following steps.
21: Receive a user identity that is for a UE to access a mobile network and is associated with a user identity for the UE to access a WLAN.
22: Enable the UE to access the mobile network according to the user identity for the UE to access the mobile network.

An executor of the method for accessing a mobile network in the embodiment of the present invention may be a gateway having a wireless access function, such as a TWAG.

Exemplarily, in the method for accessing a mobile network in the embodiment of the present invention, the user identity for the UE to access the WLAN may include: a user name, or, a user name and a password. A user name and password authentication manner for the UE to access the WLAN may be Portal authentication or PEAP authentication. The user identity for the UE to access the mobile network may include: an MSISDN and an IMSI.

The receiving a user identity that is for a UE to access a mobile network and is associated with a user identity for the UE to access a WLAN in step 21 may include:
receiving the user identity for the UE to access the mobile network, wherein the user identity for the UE to access the mobile network is associated with the user identity for the UE to access the WLAN and is sent by AAA or an AAA Proxy.

The enabling the UE to access the mobile network according to the user identity for the UE to access the mobile network in step 22 may include:
obtaining a local (local) IP for the UE to access the WLAN;
determining, according to an APN, a GGSN (Gateway GPRS Support Node, gateway GPRS support node) for accessing the mobile network, and sending a request for establishing a GTP (GPRS Tunnel Protocol, GPRS tunnel protocol) tunnel to the GGSN, where the request carries the user identity for the UE to access the mobile network;
obtaining a remote (remote) IP that is for the UE to access the mobile network and is assigned by the GGSN; and
establishing correspondence between the local IP and the remote IP, so as to enable the UE to access the mobile network.

Optionally, the correspondence between the local IP and the remote IP may be saved on the TWAG.

Optionally, correspondence between an APN and a GGSN may be configured on the TWAG.

Optionally, the method for accessing a mobile network in the embodiment of the present invention may further include:
receiving a service packet, and performing NAT (Network Address Translation, network address translation) between a local IP and a remote IP on the service packet.

The manner of enabling the UE to access the mobile network is applicable when the user name and password authentication manner for the UE to access the WLAN is a Portal authentication manner.

Alternatively, the implementation of enabling the UE to access the mobile network according to the user identity for the UE to access the mobile network in step 22 may include:
receiving a dynamic host configuration protocol DHCP request initiated by the UE;
determining, according to an APN, a GGSN for accessing the mobile network, and sending a request for establishing a GTP tunnel to the GGSN, where the request carries the user identity for the UE to access the mobile network; and
obtaining an IP that is for the UE to access the mobile network and is assigned by the GGSN, and sending the IP to the UE, so as to enable the UE to access the mobile network.

Optionally, correspondence between an APN and a GGSN may be configured on the TWAG.

The manner of enabling the UE to access the mobile network is applicable when the user name and password authentication manner for the UE to access the WLAN is a PEAP authentication manner.

Exemplarily, the method for accessing a mobile network in the embodiment of the present invention may further include:
locally setting an APN for the UE to access the mobile network; or receiving an APN that is for the UE to access the mobile network and is sent by an AAA server or an AAA Proxy.

It can be seen from the technical solution of the method for accessing a mobile network in the embodiment of the present invention that, a user identity that is for a UE to access a mobile network and is associated with a user identity for the UE to access a WLAN is obtained according to the user identity for the UE to access the WLAN, so that access of the UE to the mobile network can be implemented through the user identity for the UE to access the mobile network.

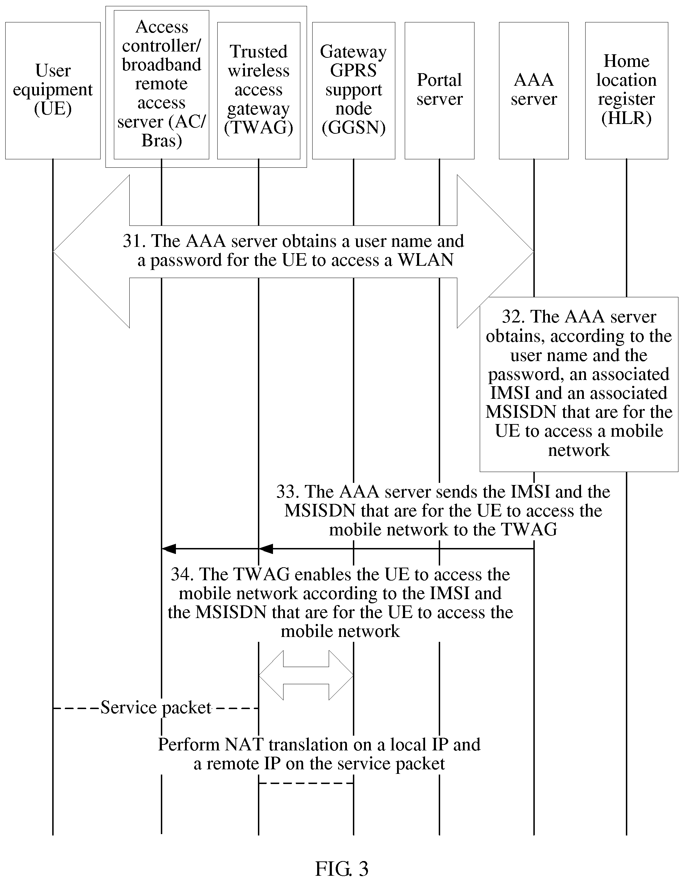

As shown in FIG. 3, a method for accessing a mobile network according to an embodiment of the present invention is specifically illustrated in the following through access of a UE to a mobile network in the case of Portal authentication,, wherein a TWAG and an AC/Bras are disposed on a same physical device.

31: An AAA server obtains a user name and a password for a UE to access a WLAN.

Exemplarily, the UE enables a WIFI (Wireless Fidelity, wireless fidelity) function, and obtains a local IP address that is of a WLAN network and is assigned by the AC/Bras. A person of ordinary skill in the art should know that WIFI is a radio access technology.

The UE enters the user name and the password in a Portal page, a Portal server sends the user name and the password to the AC/Bras, the AC/Bras sends the user name and the password to the AAA server, and the AAA server authenticates the user name and the password according to a registration record. If Portal authentication succeeds, the AAA server obtains the user name and the password for the UE to access the WLAN. For a process of the Portal authentication, reference may be made to the prior art, which is not described herein again.

The AC/Bras sends an accounting request (accounting request) message to the AAA, where the accounting request message includes a local IP of the UE. The TWAG and the AC/Bras are disposed on the same physical device, and the TWAG saves correspondence between the local IP and the UE. Alternatively, the TWAG serves as a separate function entity and is disposed separately from the AC/Bras. In this way, the TWAG forwards the message as an AAA Proxy.

32: The AAA server obtains, according to the user name and the password, an associated IMSI and an associated MSISDN that are for the UE to access a mobile network.

Exemplarily, that the AAA server associates, according to the user name and the password, an IMSI and an MSISDN that are for the UE to access a mobile network may include at least the following three manners.
(1): The AAA server obtains, according to the user name and the password, an associated user identity for the UE to access the mobile network, wherein the user identity for the UE to access the mobile network includes: the IMSI and the MSISDN.
   Optionally, the AAA server may obtain the user identity for the UE to access the mobile network from an operator data management system (including an operator database).
(2): The AAA server obtains the associated IMSI of the UE according to the user name and the password. The AAA server initiates a location update (update location) process to an HLR according to the IMSI of the UE, and the HLR delivers the MSISDN.
   Optionally, the AAA server may obtain the IMSI from an operator data management system (including an operator database).
(3): The user name of the UE is an MSISDN, and the AAA server initiates a MAP send IMSI (send IMSI) process to an HLR according to the MSISDN, and obtains IMSI information from the HLR.

In this step, optionally, the AAA server may also obtain an APN or QoS information or the like. Alternatively, a value of information, such as the APN or the QoS, may also be configured on the TWAG.

33: The AAA server sends the IMSI and the MSISDN that are for the UE to access the mobile network to the TWAG.

Exemplarily, the AAA server sends an accounting response (accounting response) message to the TWAG, where the message includes the IMSI and the MSISDN. Optionally, the message may also include a local IP, and in this case, in this step, the TWAG may also save correspondence between the local IP and the UE. Optionally, the message may also include an APN or QoS information.

34: The TWAG enables the UE to access the mobile network according to the IMSI and the MSISDN that are for the UE to access the mobile network.

Exemplarily, the TWAG selects a GGSN according to the APN, and triggers establishment of a GTP tunnel to the GGSN. Correspondence between an APN and a GGSN is configured on the TWAG.

The GGSN assigns a remote IP of the mobile network, and returns the remote IP of the mobile network to the TWAG. The TWAG saves correspondence between the local IP and the remote IP.

Subsequently, after the TWAG receives a service packet of the UE, the TWAG performs NAT translation between a local IP and a remote IP on the service packet of the UE. The TWAG sends, to the GGSN, the service packet on which the NAT translation has been performed.

In the method for accessing a mobile network in the embodiment of the present invention, step 33 may be replaced with that: The AAA server sends a separate notification message to the TWAG, for example, an authentication success message (Access Accept), where the message includes the IMSI and the MSISDN.

It can be seen from the technical solution that, a mobile user identity of a UE is obtained through association between a WLAN identity and the mobile user identity, and a mobile network is accessed through the mobile user identity of the UE, so that access of the UE to the mobile network in the case of Portal authentication can be implemented.

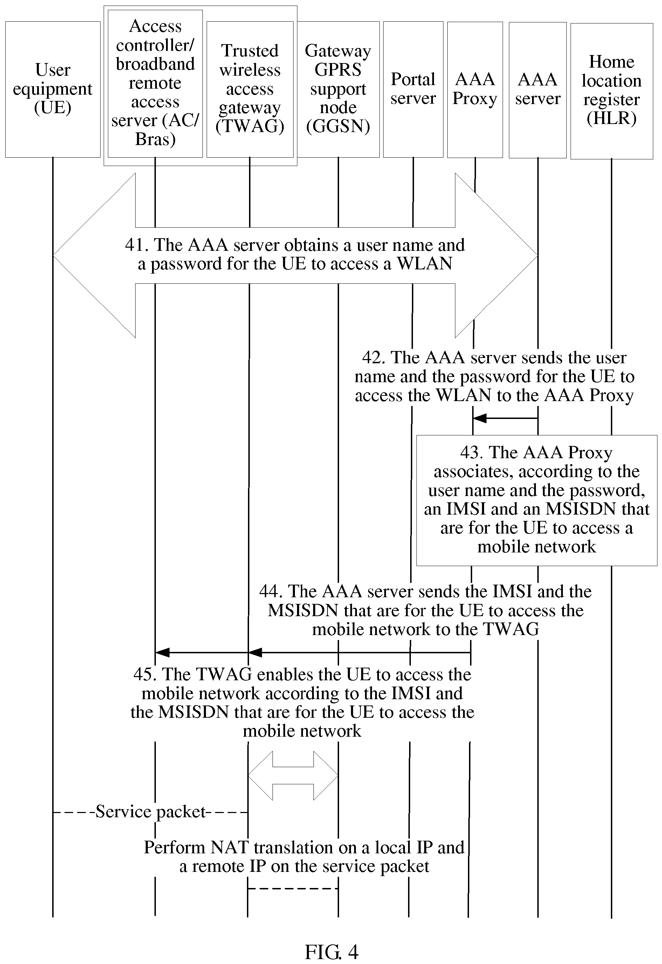

As shown in FIG. 4, a method for accessing a mobile network according to an embodiment of the present invention is specifically illustrated in the following through access of a UE to a mobile network in the case of Portal authentication where a TWAG and an AC/Bras are disposed on a same physical device.

41: An AAA server obtains a user name and a password for a UE to access a WLAN.

Exemplarily, the UE enables a WIFI function, and obtains a local IP address that is of a WLAN network and is assigned by the AC/Bras. The UE enters the user name and the password in a Portal page, a Portal server sends the user name and the password to the AC/Bras, the AC/Bras sends the user name and the password to the AAA server, and the AAA server authenticates the user name and the password according to a registration record. If Portal authentication succeeds, the AAA server obtains the user name and the password for the UE to access the WLAN. The AC/Bras sends an accounting request (accounting request) message to the AAA, where the accounting request message includes a local IP of the UE. The TWAG and the AC/Bras are disposed on the same physical device, and the TWAG saves correspondence between the local IP and the UE. Alternatively, the TWAG serves as a separate function entity and is disposed separately from the AC/Bras. In this way, the TWAG forwards the message as an AAA Proxy.

42: The AAA server sends the user name and the password for the UE to access the WLAN to the AAA Proxy.

Exemplarily, the AAA server sends an accounting response message to the AAA Proxy, where the message includes the user name and the password for the UE to access the WLAN. Optionally, the message may also include a local IP.

43: The AAA Proxy obtains, according to the user name and the password, an associated IMSI and an associated MSISDN that are for the UE to access a mobile network.

Exemplarily, that the AAA Proxy obtains, according to the user name and the password, an associated IMSI and an associated MSISDN that are for the UE to access a mobile network includes the following three manners.
(1): The AAA Proxy obtains, according to the user name and the password, an associated user identity for the UE to access the mobile network, where the user identity for the UE to access the mobile network includes: the IMSI and the MSISDN.
   Optionally, the AAA Proxy may obtain the user identity for the UE to access the mobile network from an operator data management system (including an operator database).
(2): The AAA Proxy obtains the associated IMSI of the UE according to the user name and the password. The AAA Proxy initiates a location update (update location) process to an HLR according to the IMSI of the UE, and the HLR delivers the MSISDN of the UE.
   Optionally, the AAA Proxy may obtain the IMSI from an operator data management system (including an operator database).
(3): The user name is an MSISDN, and the AAA Proxy initiates a MAP send IMSI (send IMSI) process to an HLR according to the MSISDN, and obtains IMSI information of the UE from the HLR.
   In this step, optionally, the AAA Proxy may also obtain an APN or QoS information or the like. Alternatively, a default value may also be configured on the TWAG for information such as the APN or the QoS.

44: The AAA Proxy sends the IMSI and the MSISDN that are for the UE to access the mobile network to the TWAG.

Optionally, the AAA Proxy sends an accounting response (accounting response) message to the TWAG, where the message includes the IMSI and the MSISDN. Optionally, the message may also include a local IP, and in this case, in this step, the TWAG may also save correspondence between the local IP and the UE. Optionally, the message may also include an APN or QoS information.

45: The TWAG enables the UE to access the mobile network according to the IMSI and the MSISDN that are for the UE to access the mobile network.

Optionally, the TWAG selects a GGSN according to the APN, and triggers establishment of a GTP tunnel to the GGSN. Correspondence between an APN and a GGSN is configured on the TWAG.

The GGSN assigns a remote IP of the mobile network, and returns the remote IP of the mobile network to the TWAG. The TWAG saves correspondence between the local IP and the remote IP.

Subsequently, after the TWAG receives a service packet of the UE, the TWAG performs NAT translation between a local IP and a remote IP on the service packet of the UE. The TWAG sends, to the GGSN, the service packet on which the NAT translation has been performed.

In the method for accessing a mobile network in the embodiment of the present invention, step 44 may be replaced with that: The AAA Proxy sends a separate notification message to the TWAG, for example, an authentication success message (Access Accept), where the message includes the IMSI and the MSISDN.

It can be seen from the technical solution that access of a UE to a mobile network under Portal authentication is implemented through association between a WLAN identity and a mobile user identity.

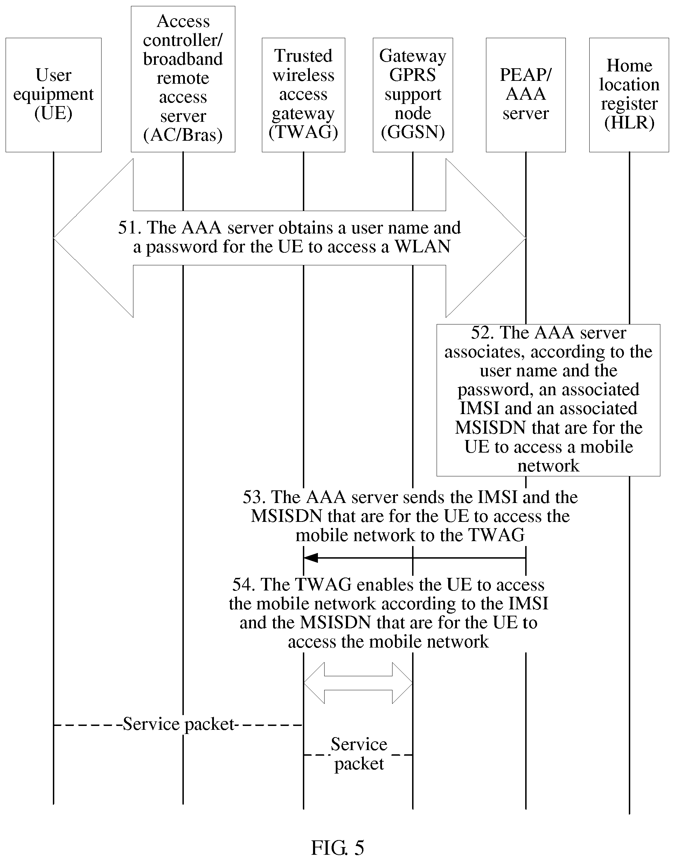

As shown in FIG. 5, a method for accessing a mobile network according to an embodiment of the present invention is specifically illustrated in the following through access of a UE to a mobile network under PEAP authentication, where a TWAG and an AC/Bras of a WLAN network are separately disposed.

51: A PEAP/AAA server obtains a user name and a password for a UE to access a WLAN.

Establishment of a TLS (Transport Layer Security, transport layer security) tunnel between the UE and the PEAP/AAA server is completed, a PEAP authentication process is completed, and the PEAP/AAA server obtains the user name and the password of the UE. For the PEAP authentication process, reference may be made to the prior art, which is not described herein again.

In the PEAP authentication process, the TWAG serves as an AAA proxy and forwards a message that is sent by the WLAN network to the PEAP/AAA server. The PEAP/AAA server refers to an AAA server having a PEAP function.

52: The PEAP/AAA server obtains, according to the user name and the password, an associated IMSI and an associated MSISDN that are for the UE to access a mobile network.

Optionally, the PEAP/AAA server may also obtain an APN or QoS information or the like. Alternatively, a default value may also be configured on the TWAG for information such as the APN or the QoS.

Exemplarily, that the PEAP/AAA server obtains, according to the user name and the password, an associated IMSI and an associated MSISDN that are for the UE to access a mobile network includes the following three manners.
(1): The PEAP/AAA server obtains, according to the user name and the password, an associated user identity for the UE to access the mobile network, where the user identity for the UE to access the mobile network includes: the IMSI and the MSISDN.
   Optionally, the PEAP/AAA server may obtain the user identity for the UE to access the mobile network from an operator data management system (including an operator database).
(2): The PEAP/AAA server obtains the associated IMSI of the UE according to the user name and the password. The PEAP/AAA server initiates a location update (location update) process to an HLR according to the IMSI of the UE, and the HLR delivers the MSISDN of the UE.
   Optionally, the AAA server may obtain the IMSI from an operator data management system (including an operator database).
(3): The user name is an MSISDN, and the PEAP/AAA server initiates a MAP send IMSI (send IMSI) process to an HLR according to the MSISDN, and obtains IMSI information of the UE from the HLR.

53: The PEAP/AAA server sends the IMSI and the MSISDN that are for the UE to access the mobile network to the TWAG.

Exemplarily, the PEAP/AAA sends an EAP success (EAP success) message to the TWAG, that is, an EAP authentication success message, where the message includes the IMSI and the MSISDN. Optionally, the message may also include an APN or QoS information.

54: The TWAG enables the UE to access the mobile network according to the IMSI and the MSISDN that are for the UE to access the mobile network.

Exemplarily, the UE initiates a DHCP process.

That the TWAG triggers, as a DHCP server (Server), establishment of a GTP tunnel is: The TWAG selects a GGSN according to the APN, and triggers establishment of a GTP tunnel to the GGSN. Correspondence between an APN and a GGSN is configured on the TWAG.

The GGSN assigns an IP address.

The TWAG sends the IP address to the UE.

Subsequently, after the TWAG receives a service packet of the UE, the TWAG sends the service packet to the GGSN according to the IP address.

It can be seen from the technical solution that a mobile user identity of a UE is obtained through association between a WLAN identity and the mobile user identity, and a mobile network is accessed through the mobile user identity, so that access of the UE to the mobile network under PEAP authentication is implemented.

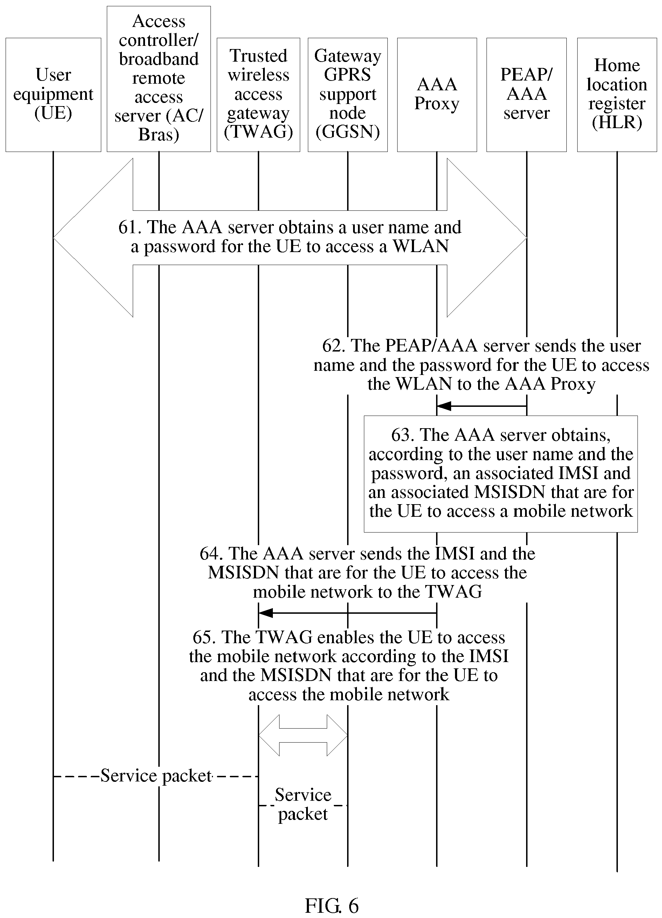

As shown in FIG. 6, a method for accessing a mobile network according to an embodiment of the present invention is specifically illustrated in the following through access of a UE to a mobile network under PEAP authentication, where a TWAG and an AC/Bras of a WLAN network are separately disposed.

61: An AAA server obtains a user name and a password for a UE to access a WLAN.

Establishment of a TLS tunnel between the UE and a PEAP/AAA server is completed, a PEAP authentication process is completed, and the PEAP/AAA server obtains the user name and the password of the UE.

In the process, the TWAG serves as an AAA proxy and forwards a message that is sent by the WLAN network to the PEAP/AAA server. The PEAP/AAA server refers to an AAA server having a PEAP function.

62: The PEAP/AAA server sends the user name and the password for the UE to access the WLAN to the AAA Proxy.

The PEAP/AAA server sends an EAP success (EAP success) message to the AAA Proxy, that is, an EAP authentication success message, where the message includes the user name and the password for the UE to access the WLAN.

63: The AAA Proxy obtains, according to the user name and the password, an associated IMSI and an associated MSISDN that are for the UE to access a mobile network.

Optionally, the AAA Proxy may also obtain an APN or QoS information or the like. Alternatively, a default value may also be configured on the TWAG for information such as the APN or the QoS.

Exemplarily, that the AAA Proxy associates, according to the user name and the password, an IMSI and an MSISDN that are for the UE to access a mobile network includes the following three manners.
(1): The AAA Proxy obtains, according to the user name and the password, an associated user identity for the UE to access the mobile network, where the user identity for the UE to access the mobile network includes: the IMSI and the MSISDN.
   Optionally, the AAA Proxy may obtain the user identity for the UE to access the mobile network from an operator data management system (including an operator database).
   Or
(2): The AAA Proxy obtains the associated IMSI of the UE according to the user name and the password. The PEAP/AAA server initiates a location update (update location) process to an HLR according to the IMSI of the UE, and the HLR delivers the MSISDN.
   Optionally, the AAA Proxy may obtain the IMSI from an operator data management system (including an operator database).
   Or
(3): The user name is an MSISDN, and the AAA Proxy initiates a MAP send IMSI (send IMSI) process to an HLR according to the MSISDN, and obtains IMSI information of the UE from the HLR.

64: The AAA Proxy sends the IMSI and the MSISDN that are for the UE to access the mobile network to the TWAG.

Specifically, the PEAP/AAA sends an EAP success (EAP success) message to the TWAG, that is, an EPA authentication success message, where the message includes the IMSI and the MSISDN. Optionally, the message may also include an APN or QoS information.

65: The TWAG enables the UE to access the mobile network according to the IMSI and the MSISDN that are for the UE to access the mobile network.

Exemplarily, the UE initiates a DHCP process.

That the TWAG triggers, as a DHCP server (Server), establishment of a GTP tunnel is: The TWAG selects a GGSN according to the APN, and triggers establishment of a GTP tunnel to the GGSN. Correspondence between an APN and a GGSN is configured on the TWAG.

The GGSN assigns an IP address.

The TWAG sends the IP address to the UE.

Subsequently, after the TWAG receives a service packet of the UE, the TWAG sends the service packet to the GGSN according to the IP address.

It can be seen from the technical solution that a mobile user identity of a UE can be obtained through association between a WLAN identity and the mobile user identity, so that a mobile network is accessed through the mobile user identity of the UE, thereby implementing access of the UE to the mobile network under PEAP authentication.

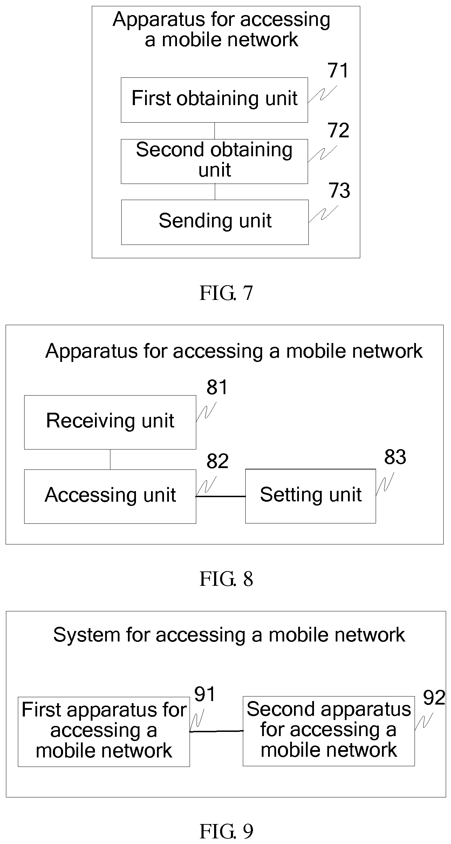

As shown in FIG. 7, corresponding to the method for accessing a mobile network in the foregoing embodiment, an embodiment of the present invention provides an apparatus for accessing a mobile network, which includes:
a first obtaining unit 71, configured to obtain a user identity for a UE to access a WLAN;
a second obtaining unit 72, configured to obtain, according to the user identity for the UE to access the WLAN, a user identity that is for the UE to access a mobile network and is associated with the user identity for the UE to access the WLAN; and
a sending unit 73, configured to send the user identity for the UE to access the mobile network to a TWAG, so as to instruct the TWAG to enable the UE to access the mobile network.

The apparatus for accessing a mobile network in the embodiment of the present invention may be an AAA server or an AAA Proxy. The TWAG may serve as an AAA Proxy. Optionally, the apparatus for accessing a mobile network may also be an independent network element.

In the apparatus for accessing a mobile network in the embodiment of the present invention, the first obtaining unit may be a receiver, which obtains the user identity for the UE to access the WLAN. The second obtaining unit may be a processor, which obtains the user identity that is for the UE to access the mobile network and is associated with the user identity for the UE to access the WLAN. The sending unit may be a transmitter, which sends the user identity for the UE to access the mobile network to the TWAG.

The user identity for the UE to access the WLAN includes: a user name or a user name and a password. A user name and password authentication manner for the UE to access the WLAN may be Portal authentication or PEAP authentication.

The user identity for the UE to access the mobile network includes: an MSISDN and an IMSI.

Exemplarily, the second obtaining unit 72 may be specifically configured to obtain, according to the user name, association between the user name and an MSISDN, and association between the user name and an IMSI, the MSISDN and the IMSI that are associated with the user name, where the association between the user name and the MSISDN and the association between the user name and the IMSI are preconfigured; or
specifically configured to obtain, according to the user name and the password, association between the user name and the password and an MSISDN, and association between the user name and the password and an IMSI, the MSISDN and the IMSI that are associated with the user name and the password, where the association between the user name and the password and the MSISDN and the association between the user name and the password and the IMSI are preconfigured.

Or, the second obtaining unit 72 may be specifically configured to obtain, according to the user name and association between the user name and an IMSI, the IMSI associated with the user name, and obtain an MSISDN that is associated with the IMSI associated with the user name from a home location register HLR or a home subscriber server HSS according to the IMSI associated with the user name, where the association between the user name and the IMSI is preconfigured; or
specifically configured to obtain, according to the user name and the password and association between the user name and the password and an IMSI, the IMSI associated with the user name and the password, and obtain an MSISDN that is associated with the IMSI associated with the user name and the password from a home location register HLR or a home subscriber server HSS according to the IMSI associated with the user name and the password, where the association between the user name and the password and the IMSI is preconfigured.

Or, the second obtaining unit 72 may be specifically configured to, when the user name is an MSISDN, obtain an IMSI associated with the MSISDN from an HLR or an HSS according to the MSISDN.

In the apparatus for accessing a mobile network in the embodiment of the present invention, exemplarily, the sending unit 43 may be configured to:
send the user identity for the UE to access the mobile network to the TWAG through an accounting response message; or
send the user identity for the UE to access the mobile network to the TWAG through an authentication response message.

The user name or the user name and the password may also be associated with subscription data of the mobile network, such as an APN or QoS information. In the apparatus for accessing a mobile network in the embodiment of the present invention, the sending unit 73 may further be configured to send the APN to the TWAG.

Exemplarily, the sending the APN to the TWAG may include: sending the APN to the TWAG to the TWAG through an accounting response message, or sending the APN to the TWAG to the TWAG through an authentication response message.

The apparatus for accessing a mobile network in the embodiment of the present invention and its structure and working mechanism may be understood with corresponding reference to the methods for accessing a mobile network shown in FIG. 1 to FIG. 6, which are not described herein again.

It can be seen from the technical solution of the apparatus for accessing a mobile network according to the embodiment of the present invention that, a user identity that is for a UE to access a mobile network and is associated with a user identity for the UE to access a WLAN is obtained according to the user identity for the UE to access the WLAN, so that the user identity for the UE to access the mobile network can be authenticated, thereby implementing access of the UE to the mobile network.

As shown in FIG. 8, corresponding to the method for accessing a mobile network in the foregoing embodiment, an embodiment of the present invention provides an apparatus for accessing a mobile network, which includes:
a receiving unit 81, configured to receive a user identity that is for a UE to access a mobile network and is associated with a user identity for the UE to access a WLAN; and
an accessing unit 82, configured to enable the UE to access the mobile network according to the user identity for the UE to access the mobile network.

The apparatus for accessing a mobile network in the embodiment of the present invention may be a TWAG. The TWAG is separately disposed, or the TWAG and the AC/Bras are disposed on one entity.

In the apparatus for accessing a mobile network in the embodiment of the present invention, the receiving unit may be a receiver, which receives the user identity for the UE to access the mobile network. The accessing unit may be a processor, which enables the UE to access the mobile network according to the user identity for the UE to access the mobile network.

Exemplarily, the user identity for the UE to access the WLAN may include: a user name or a user name and a password. A user name and password authentication manner for the UE to access the WLAN may be Portal authentication or PEAP authentication.

The user identity for the UE to access the mobile network may include: an MSISDN and an IMSI.

The accessing unit 82 may be specifically configured to:
obtain a local local IP for the UE to access the WLAN;
determine, according to an APN for the UE to access the mobile network, a GGSN for accessing the mobile network, and send a request for establishing a GTP tunnel to the GGSN, where the request carries the user identity for the UE to access the mobile network;
obtain a remote remote IP that is for the UE to access the mobile network and is assigned by the GGSN; and
establish correspondence between the local IP and the remote IP, so as to enable the UE to access the mobile network.

Further, the apparatus for accessing a mobile network in the embodiment of the present invention may further include:
a NAT unit, configured to receive a service packet and perform network address translation NAT between a local IP and a remote IP on the service packet.

Or, the accessing unit 82 may be specifically configured to:
receive a dynamic host configuration protocol DHCP request initiated by the UE;
determine, according to an APN for the UE to access the mobile network, a GGSN for accessing the mobile network, and send a request for establishing a GTP tunnel to the GGSN, where the request carries the user identity for the UE to access the mobile network; and
obtain an IP that is for the UE to access the mobile network and is assigned by the GGSN.

The apparatus for accessing a mobile network in the embodiment of the present invention may further include:
a setting unit 83, configured to locally set an APN for the UE to access the mobile network.

Or, the receiving unit 81 may further be configured to receive an APN that is for the UE to access the mobile network and is sent by an AAA server or an AAA Proxy on set.

The apparatus for accessing a mobile network in the embodiment of the present invention and its structure and working mechanism may be understood with corresponding reference to the methods for accessing a mobile network shown in FIG. 1 to FIG. 6, which are not described herein again.

It can be seen from the technical solution of the apparatus for accessing a mobile network according to the embodiment of the present invention that, a user identity that is for a UE to access a mobile network and is associated with a user identity for the UE to access a WLAN is obtained according to the user identity for the UE to access the WLAN, so that the user identity for the UE to access the mobile network can be authenticated, thereby implementing access of the UE to the mobile network.

As shown in FIG. 9, an embodiment of the present invention provides a system for accessing a mobile network, which includes:
a first apparatus 91 for accessing a mobile network, configured to obtain a user identity for a user equipment UE to access a wireless local area network WLAN; obtain, according to the user identity for the UE to access the WLAN, a user identity that is for the UE to access a mobile network and is associated with the user identity for the UE to access the WLAN; and send the user identity for the UE to access the mobile network to a trusted wireless access gateway TWAG, so as to instruct the TWAG to enable the UE to access the mobile network; and
a second apparatus 92 for accessing a mobile network, configured to receive the user identity that is for the UE to access the mobile network and is associated with the user identity for the UE to access the WLAN; and enable the UE to access the mobile network according to the user identity for the UE to access the mobile network.

It can be seen from the technical solution of the apparatus for accessing a mobile network according to the embodiment of the present invention that, a user identity that is for a UE to access a mobile network and is associated with a user identity for the UE to access a WLAN is obtained according to the user identity for the UE to access the WLAN, so that the user identity for the UE to access the mobile network can be authenticated, thereby implementing access of the UE to the mobile network.

The first apparatus for accessing a mobile network in the embodiment of the present invention and its structure may be understood with corresponding reference to the apparatus for accessing a mobile network in the foregoing embodiment shown in FIG. 7, which are not described herein again.

The second apparatus for accessing a mobile network and its structure may be understood with corresponding reference to the apparatus for accessing a mobile network in the foregoing embodiment shown in FIG. 8, which are not described herein again.

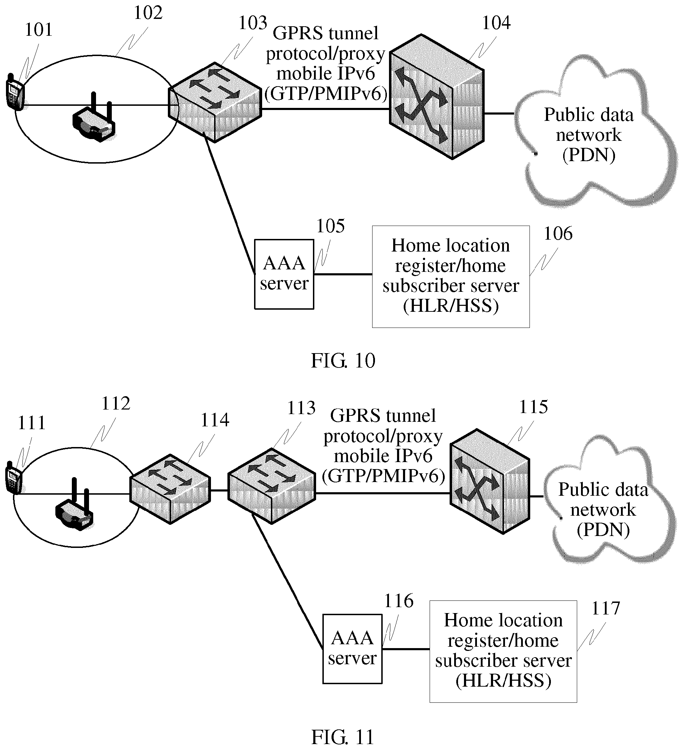

Exemplarily, FIG. 10 is a schematic diagram of an application scenario of a system for accessing a mobile network according to an embodiment of the present invention.

A TWAG is a part of a WLAN network, and the TWAG and an existing AC/Bras in the WLAN network may be disposed on a same physical device.

A UE 101 accesses a WLAN network 102, a TWAG and an existing AC/Bras in the WLAN network may be disposed on a same physical device, and a GTP or PMIPv6 (Proxy MIPv6, proxy mobile IPv6) capability may be integrated on the AC/Bras. A TWAG 103 is responsible for establishing an IP connection with a GGSN or P-GW (Packet-Gateway, packet data gateway) 104. The TWAG also communicates with an AAA server 105, and the AAA server 105 communicates with an HLR/HSS 106.

Exemplarily, FIG. 11 is a schematic diagram of another application scenario of a system for accessing a mobile network according to an embodiment of the present invention.

A TWAG serves as a separate function entity, the TWAG and an AC/Bras are separately disposed, and the AC/Bras communicates with AAA through the TWAG.

A UE 111 accesses a WLAN network 112, a TWAG 113 and an AC/Bras 114 are separately disposed, and the TWAG 113 is responsible for establishing an IP connection with a GGSN or PGW 115. The separate TWAG implements a GTP or PMIPv6 capability, and the TWAG and the existing WLAN network are connected through a layer 2 VLAN (Virtual Local Area Network, virtual local area network) or layer 3 VPN (Virtual Private Network, virtual private network) tunnel. The TWAG 113 also communicates with an AAA server 116, and the AAA server 116 communicates with an HLR/HSS 117.

A person of ordinary skill in the art may understand that all or a part of the procedures of the methods in the foregoing embodiments may be implemented by a computer program instructing relevant hardware. The program may be stored in a computer readable storage medium. When the program runs, the procedures of the methods in the foregoing embodiments are performed. The storage medium may be a magnetic disk, an optical disc, a read-only memory (Read-Only Memory, ROM), or a random access memory (Random Access Memory, RAM) or the like.

## Claims

1. A method for accessing a mobile network, comprising:
receiving (21) a user identity that is for a UE to access the mobile network, wherein the user identity for the UE to access the mobile network comprises an MSISDN and an IMSI, and is associated with a user identity for the UE to access a WLAN, wherein the user identity for the UE to access the WLAN comprises a user name and a password and the user name of the UE is the MSISDN; and
enabling (22) the UE to access the mobile network according to the user identity for the UE to access the mobile network, in that the receiving (21) a user identity that is for a UE to access the mobile network and the enabling (22) the UE to access the mobile network according to the user identity for the UE to access the mobile network are executed by a Trusted WLAN Access Gateway, TWAG, wherein
the user name and the password for the UE to access the WLAN are obtained by an AAA server or an AAA proxy, and the user name of the UE is the MSISDN, and the IMSI associated with the MSISDN are obtained by the AAA server or the AAA proxy from an HLR or an HSS according to the MSISDN, and the IMSI and the MSISDN are sent by the AAA server or the AAA proxy to the TWAG through an accounting response message to enable the UE to access the mobile network and the enabling the UE to access the mobile network according to the user identity for the UE to access the mobile network comprises:
obtaining a local IP for the UE to access the WLAN;
determining, according to an APN, a GGSN for accessing the mobile network, and sending a request for establishing a GTP tunnel to the GGSN, wherein the request carries the user identity for the UE to access the mobile network, and the user identity for the UE to access the mobile network comprises the MSISDN and the IMSI;
obtaining a remote IP that is for the UE to access the mobile network and is assigned by the GGSN; and
establishing a correspondence between the local IP and the remote IP, so as to enable the UE to access the mobile network, wherein the method further comprises:
receiving a service packet, and performing network address translation NAT between the local IP and the remote IP on the service packet.

2. A system comprising an apparatus for accessing a mobile network, wherein the apparatus for accessing the mobile network is a Trusted WLAN Access Gateway, TWAG and the TWAG is configured to communicate with an AAA server or an AAA proxy and wherein the system is also comprising the AAA server or the AAA proxy, which is configured to communicate with an HLR or an HSS, the AAA server or the AAA proxy, configured to obtain the user name and the password for the UE to access a WLAN, the user name of the UE being the MSISDN, and to obtain the IMSI associated with the MISDN from the HLR or the HSS according to the MSISDN, and to send the IMSI and the MSISDN to the TWAG through an accounting response message to enable the UE to access the mobile network, and the apparatus comprising:
a receiving unit (81), configured to receive the user identity that is for a UE to access the mobile network, wherein the user identity for the UE to access the mobile network comprises the MSISDN and the IMSI, and is associated with a user identity for the UE to access the WLAN, wherein the user identity for the UE to access the WLAN comprises the user name and the password and the user name of the UE is the MSISDN; and
an accessing unit (82), configured to enable the UE to access the mobile network according to the user identity for the UE to access the mobile network, wherein the accessing unit is specifically configured to:
obtain a local IP for the UE to access the WLAN;
determine, according to an APN, a GGSN for accessing the mobile network, and send a request for establishing a GTP tunnel to the GGSN, wherein the request carries the user identity for the UE to access the mobile network, and the user identity for the UE to access the mobile network comprises the MSISDN and the IMSI;
obtain a remote IP that is for the UE to access the mobile network and is assigned by the GGSN; and
establish and determine a correspondence between the local IP and the remote IP, so as to enable the UE to access the mobile network, wherein the apparatus further comprises:
a NAT unit, configured to receive a service packet and perform network address translation NAT between a local IP and a remote IP on the service packet.

3. The system according to claim 2, wherein the apparatus further comprises:
a setting unit, configured to locally set an APN for the UE to access the mobile network; or
wherein the receiving unit is further configured to receive an APN that is for the UE to access the mobile network and is sent by the AAA server or the AAA Proxy on set.

## Patentansprüche

1. Verfahren zum Zugreifen auf ein mobiles Netzwerk, das Folgendes umfasst:
Empfangen (21) einer Benutzeridentität für das Zugreifen einer UE auf das mobile Netzwerk, wobei die Benutzeridentität für das Zugreifen der UE auf das mobile Netzwerk eine MSISDN und eine IMSI umfasst, und mit einer Benutzeridentität für das Zugreifen der UE auf ein WLAN verknüpft ist, wobei die Benutzeridentität für das Zugreifen der UE auf das WLAN einen Benutzernamen und ein Passwort umfasst und wobei der Benutzername der UE die MSISDN ist; und
Ermöglichen (22) des Zugreifens der UE auf das mobile Netzwerk entsprechend der Benutzeridentität für das Zugreifen der UE auf das mobile Netzwerk, wobei das Empfangen (21) einer Benutzeridentität für das Zugreifen einer UE auf das mobile Netzwerk und das Ermöglichen (22) des Zugreifens der UE auf das mobile Netzwerk entsprechend der Benutzeridentität für das Zugreifen der UE auf das mobile Netzwerk von einem vertrauenswürdigen WLAN-Zugangsportal (TWAG) ausgeführt werden, wobei der Benutzername und das Passwort für das Zugreifen der UE auf das WLAN durch einen AAA-Server oder einen AAA-Proxy erhalten werden, und wobei der Benutzername der UE die MSISDN ist, und wobei die mit der MSISDN verknüpften IMSI durch den AAA-Server oder den AAA-Proxy von einer HLR oder einem HSS entsprechend der MSISDN erhalten werden und wobei die IMSI und die MSISDN von dem AAA-Server oder dem AAA-Proxy durch eine Berechnungsantwortnachricht an das TWAG gesendet werden, um das Zugreifen der UE auf das mobile Netzwerk zu ermöglichen und wobei das Ermöglichen des Zugreifens der UE auf das mobile Netzwerk entsprechend der Benutzeridentität für das Zugreifen der UE auf das mobile Netzwerk Folgendes umfasst:
Erhalten einer lokalen IP für das Zugreifen der UE auf das WLAN;
Bestimmen eines GGSN zum Zugreifen auf das mobile Netzwerk entsprechend einem APN, und Senden einer Anfrage zum Erstellen eines GTP-Tunnels zum GGSN, wobei die Anfrage die Benutzeridentität für das Zugreifen der UE auf das mobile Netzwerk trägt, und wobei die Benutzeridentität für das Zugreifen der UE auf das mobile Netzwerk die MSISDN und die IMSI umfasst;
Erhalten einer Remote-IP für das Zugreifen der UE auf das mobile Netzwerk und zugewiesen durch den GGSN; und
Erstellen einer Korrespondenz zwischen der lokalen IP und der Remote-IP, um das Zugreifen der UE auf das mobile Netzwerk zu ermöglichen, wobei das Verfahren ferner Folgendes umfasst:
Empfangen eines Servicepakets und Ausführen einer Netzwerkadressübersetzung (NAT) zwischen der lokalen IP und der Remote-IP auf dem Servicepaket.

2. System, das eine Vorrichtung zum Zugreifen auf ein mobiles Netzwerk umfasst, wobei die Vorrichtung zum Zugreifen auf das mobile Netzwerk ein vertrauenswürdiges WLAN-Zugangsportal (TWAG) ist, und wobei das TWAG dazu konfiguriert ist, mit einem AAA-Server oder einem AAA-Proxy zu kommunizieren und wobei das System auch den AAA-Server oder den AAA-Proxy umfasst, der dazu konfiguriert ist, mit einer HLR oder einem HSS zu kommunizieren, wobei der AAA-Server oder der AAA-Proxy dazu konfiguriert ist, den Benutzernamen und das Passwort für das Zugreifen der UE auf ein WLAN zu erhalten, wobei der Benutzername der UE die MSISDN ist, und dazu, die mit der MSISDN verknüpften IMSI von der HLR oder dem HSS entsprechend der MSISDN zu erhalten, und dazu, die IMSI und die MSISDN durch eine Berechnungsantwortnachricht an das TWAG zu senden, um das Zugreifen der UE auf das mobile Netzwerk zu ermöglichen, wobei die Vorrichtung Folgendes umfasst:
eine Empfangseinheit (81), die dazu konfiguriert ist, die Benutzeridentität für das Zugreifen einer UE auf das mobile Netzwerk zu empfangen, wobei die Benutzeridentität für das Zugreifen der UE auf das mobile Netzwerk die MSISDN und die IMSI umfasst, und mit einer Benutzeridentität für das Zugreifen der UE auf das WLAN verknüpft ist, wobei die Benutzeridentität für das Zugreifen der UE auf das WLAN den Benutzernamen und das Passwort umfasst und wobei der Benutzername der UE die MSISDN ist; und
eine Zugriffseinheit (82), die dazu konfiguriert ist, das Zugreifen der UE auf das mobile Netzwerk entsprechend der Benutzeridentität für das Zugreifen der UE auf das mobile Netzwerk zu ermöglichen, wobei die Zugriffseinheit besonders dazu konfiguriert ist:
eine lokale IP für das Zugreifen der UE auf das WLAN zu erhalten;
ein GGSN für das Zugreifen auf das mobile Netzwerk entsprechend einer APN zu bestimmen, und eine Anfrage für das Erstellen eines GTP-Tunnels zu dem GGSN zu senden, wobei die Anfrage die Benutzeridentität für das Zugreifen einer UE auf ein mobiles Netzwerk trägt, und wobei die Benutzeridentität für das Zugreifen der UE auf das mobile Netzwerk die MSISDN und die IMSI umfasst;
Erhalten einer Remote-IP für das Zugreifen der UE auf das mobile Netzwerk und zugewiesen durch den GGSN; und
Erstellen und Bestimmen einer Korrespondenz zwischen der lokalen IP und der Remote-IP, um das Zugreifen der UE auf das mobile Netzwerk zu ermöglichen, wobei die Vorrichtung ferner Folgendes umfasst:
eine NAT-Einheit, die dazu konfiguriert ist, ein Servicepaket zu empfangen und eine Netzwerkadressübersetzung (NAT) zwischen einer lokalen IP und einer Remote-IP auf dem Servicepaket durchzuführen.

3. System nach Anspruch 2, wobei die Vorrichtung ferner Folgendes umfasst:
eine Einstelleinheit, die dazu konfiguriert ist, einen APN lokal für das Zugreifen der UE auf das mobile Netzwerk einzustellen; oder
wobei die Empfangseinheit ferner dazu konfiguriert ist, einen APN für das Zugreifen der UE auf das mobile Netzwerk zu empfangen, der von dem AAA-Server oder dem AAA-Proxy auf der Reihe gesendet wird.

## Revendications

1. Procédé d'accès à un réseau mobile, comprenant :
la réception (21) d'une identité d'utilisateur qui permet à un UE d'accéder au réseau mobile, dans lequel l'identité d'utilisateur pour que l'UE accède au réseau mobile comprend un MSISDN et un IMSI, et est associée à une identité d'utilisateur pour que l'UE accède à un WLAN, dans lequel l'identité d'utilisateur pour que l'UE accède au WLAN comprend un nom d'utilisateur et un mot de passe et le nom d'utilisateur de l'UE est le MSISDN ; et
l'autorisation (22) de l'UE d'accéder au réseau mobile selon l'identité d'utilisateur pour que l'UE accède au réseau mobile, en ce que
la réception (21) d'une identité d'utilisateur qui permet à l'UE d'accéder au réseau mobile et l'autorisation (22) de l'UE d'accéder au réseau mobile selon l'identité d'utilisateur pour que l'UE accède au réseau mobile sont exécutées par une passerelle d'accès WLAN sécurisée, TWAG, dans lequel
le nom d'utilisateur et le mot de passe pour que l'UE accède au WLAN sont obtenus par un serveur AAA ou un mandataire AAA, et le nom d'utilisateur de l'UE est le MSISDN, et l'IMSI associé au MSISDN sont obtenus par le serveur AAA ou le mandataire AAA à partir d'un HLR ou d'un HSS selon le MSISDN et l'IMSI et le MSISDN sont envoyés par le serveur AAA ou le mandataire AAA à la TWAG par un message de réponse de compte pour autoriser l'UE à accéder au réseau mobile et l'autorisation de l'UE d'accéder au réseau mobile selon l'identité d'utilisateur pour que l'UE accède au réseau mobile comprend :
l'obtention d'un IP local pour que l'UE accède au WLAN ;
la détermination, selon un APN, d'un GGSN pour accéder au réseau mobile, et l'envoi d'une demande d'établissement d'un tunnel GTP au GGSN, dans lequel la demande achemine l'identité d'utilisateur pour que l'UE accède au réseau mobile, et l'identité d'utilisateur pour que l'UE accède au réseau mobile comprend le MSISDN et l'IMSI ;
l'obtention d'un IP à distance qui permet à l'UE d'accéder au réseau mobile et est attribué par le GGSN ; et
l'établissement d'une correspondance entre l'IP local et l'IP à distance, de façon à autoriser l'UE à accéder au réseau mobile, dans lequel le procédé comprend en outre :
la réception d'un paquet de service, et la réalisation d'une traduction d'adresse de réseau NAT entre l'IP local et l'IP à distance sur le paquet de service.

2. Système comprenant un appareil d'accès à un réseau mobile, dans lequel l'appareil d'accès au réseau mobile est une passerelle d'accès WLAN sécurisée, TWAG, et la TWAG est configurée pour communiquer avec un serveur AAA ou un mandataire AAA et dans lequel le système comprend également le serveur AAA ou le mandataire AAA, qui est configuré pour communiquer avec un HLR ou un HSS, le serveur AAA ou le mandataire AAA, configuré pour obtenir le nom d'utilisateur et le mot de passe pour que l'UE accède à un WLAN, le nom d'utilisateur de l'UE étant le MSISDN, et pour obtenir l'IMSI associé au MSISDN à partir du HLR ou du HSS selon le MSISDN, et pour envoyer l'IMSI et le MSISDN à la TWAG par un message de réponse de compte pour autoriser l'UE à accéder au réseau mobile, et l'appareil comprenant :
une unité de réception (81), configurée pour recevoir l'identité d'utilisateur qui permet à un UE d'accéder au réseau mobile, dans lequel l'identité d'utilisateur pour que l'UE accède au réseau mobile comprend le MSISDN et l'IMSI, et est associée à une identité d'utilisateur pour que l'UE accède au WLAN, dans lequel
l'identité d'utilisateur pour que l'UE accède au WLAN comprend le nom d'utilisateur et le mot de passe et le nom d'utilisateur de l'UE est le MSISDN ; et
une unité d'accès (82), configurée pour autoriser l'UE à accéder au réseau mobile selon l'identité d'utilisateur pour que l'UE accède au réseau mobile, dans lequel l'unité d'accès est spécifiquement configurée pour :
obtenir un IP local pour que l'UE accède au WLAN ;
déterminer, selon un APN, un GGSN pour accéder au réseau mobile, et envoyer une demande d'établissement d'un tunnel GTP au GGSN,
dans lequel la demande achemine l'identité d'utilisateur pour que l'UE accède au réseau mobile, et l'identité d'utilisateur pour que l'UE accède au réseau mobile comprend le MSISDN et l'IMSI ;
obtenir un IP à distance qui permet à l'UE d'accéder au réseau mobile et est attribué par le GGSN ; et
établir et déterminer une correspondance entre l'IP local et l'IP à distance, de façon à autoriser l'UE à accéder au réseau mobile, dans lequel l'appareil comprend en outre :
une unité NAT, configurée pour recevoir un paquet de services, et réaliser une traduction d'adresse de réseau NAT entre un IP local et un IP à distance sur le paquet de service.

3. Système selon la revendication 2,
dans lequel l'appareil comprend en outre :
une unité de réglage, configurée pour régler localement un APN pour que l'UE accède au réseau mobile ; ou
dans lequel l'unité de réception est en outre configurée pour recevoir un APN qui permet à l'UE d'accéder au réseau mobile et est envoyé par le serveur AAA ou le mandataire AAA à la mise en route.
